# FASCICULE DE BREVET EUROPEEN

(11) **EP 0 856 034 B1**
(45) Date de publication et mention de la délivrance du brevet: **17.04.2002**
(21) Numéro de dépôt: 96934906.7
(22) Date de dépôt: 14.10.1996
(51) Int. Cl.: C09D 9/00

(54) **COMPOSITION EPAISSIE POUR LE DECAPAGE DES PEINTURES**
DICKE ABBEITZMITTEL-ZUSAMMENSETZUNG
THICK PAINT STRIPPING COMPOSITION

(30) Priorité: 18.10.1995 FR 9512214
(43) Date de publication de la demande: 05.08.1998
(73) Titulaire: Atofina, 92800 Puteaux (FR)
(72) Inventeur: LALLIER, Jean-Pierre, F-92400 Courbevoie (FR)
(86) Numéro de dépôt international: FR9601600
(87) Numéro de publication internationale: WO9714757

(56) Documents cités:
- EP-A- 0 490 726
- EP-A- 0 573 339
- WO-A-92/05224
- US-A- 2 694 658

## Description

La présente invention concerne une composition épaissie destinée au décapage des peintures et/ou vernis.

Les demandes de brevets EP-490726 et EP-573339 décrivent des compositions décapantes comprenant un solvant polaire aprotique et un éther non protique. Le solvant polaire peut être du Diméthylsulfoxyde (DMSO) ou de la N-méthylpyrrolidinone (NMP). L'éther doit être non protique, c'est à dire dépourvu d'une liaison covalente X-H dans laquelle X est un hétéroatome, et doit également avoir un volume moléculaire le plus faible possible. Cet éther peut être par exemple du 2-Méthoxy-1,3-dioxolane. La composition peut contenir un épaississant tel que la méthylcellulose ou un aérosil (silice pyrogénée).

Par ailleurs, la demande de brevet GB 2150587 décrit une composition pour décaper les peintures comprenant du chlorure de méthylène, du méthanol, un copolymère de chlorure de vinyle majoritaire et d'un ester acrylique minoritaire contenant des groupes hydroxyle libres. Cette composition doit comporter également un épaississant afin d'obtenir une viscosité correcte et une bonne adhérence. Cet épaississant est avantageusement un polymère d'acide acrylique combiné à un saccharide du type vendu par la Société B.F. GOODRICH sous la marque Carbopol® et en particulier les Carbopol® 940, 941 et 934 et leurs équivalents techniques dans les séries dénommées 800.

Les épaississants de ce type sont utilisés conjointement avec une amine neutralisante, généralement une amine aliphatique ayant de 6 à 20 atomes de carbone. Avantageusement, l'amine est liquide à température ambiante. Parmi ces amines on distingue en particulier les amines N,N-diméthylées en C8 à C14, telle que la N,N-diméthyltétradécylamine.

Cette composition à base de chlorure de méthylène (solvant) contient également de 0,05 à 0,1 % d'une cire pour s'opposer à l'évaporation du solvant et une petite quantité d'eau nécessaire à la formation de liaisons hydrogènes avec l'épaississant du type Carbopol® , ce dernier étant présent en une quantité en poids de 0,3 à 1 %, par exemple de 0,5 à 0,6 % en poids par rapport au poids de la composition.

La demande de brevet WO 92/05224 décrit une composition sans solvant chloré pour décaper les peintures, les vernis et analogues , et possédant une rhéologie efficace identique à celle d'une peinture.

Bien que la composition puisse être exempte d'acide acétique et d'eau, la composition la plus préférée comporte cependant les ingrédients liquides suivants rapportés en pourcentage en volume de la composition finale:
- Ester dibasique d' acide aliphatique 48 %
- N-Méthyl-2-pyrrolidinone 15 %
- Mélange de Propylène glycol méthyl éther et de Dipropylène glycol méthyl éther 20 %
- Polymère acrylique 5 %
- Eau 5 %
- Acide acétique 2 %

L'ester dibasique préféré est commercialement disponible sous le nom D.B.E.( Dupont Chemicals Inc.).

Le polymère acrylique a pour fonction, d'améliorer la rhéologie de la composition. Ces liquides sont de préférence mélangés à un agent épaississant pour former un gel. De préférence l'agent épaississant est de l'hydroxypropyl méthylcellulose utilisé à une teneur d'environ 1 %. D'autres charges peuvent être ajoutées à ce gel, tels que polymères, dioxyde de titane et colorants.

Cette dernière composition de l'art antérieur comporte des éthers de glycols, protiques par la présence de groupes OH libres, et des diesters aliphatiques en un pourcentage conséquent 48 %. Ces diesters sont insolubles dans l'eau, ce qui peut entraîner des difficultés de rinçage du subjectile après décapage de ses couches de peinture.

Le but de la présente invention est de proposer une composition décapante des peintures sous la forme d'une formulation épaissie, exempte de produits halogénés, plus efficace, en terme de rapidité d'action sur couches de peinture, que les compositions de l'art antérieur. De plus cette formulation épaissie ne doit pas démixer pendant la durée du décapage, même en atmosphère humide, doit être facilement applicable au pinceau, à la brosse ou au rouleau et enfin doit être facilement rinçable à l'eau.

Ce but est atteint par une composition épaissie destinée au décapage des peintures et/ou vernis caractérisée en ce que elle comprend :
a/ un solvant polaire aprotique en une quantité de 1 à 100 parties en poids,
b/ un éther hydrosoluble non protique, en une quantité de 1 à 100 parties en poids,
c/ un épaississant hydrosoluble choisi parmi des polymères à base d'acide acrylique, en une quantité de 0,002 à 10 parties en poids,
d/ une amine aliphatique ayant de 6 à 20 atomes de carbone.

Avantageusement, le solvant polaire aprotique est choisi parmi le Diméthylsulfoxyde (DMSO), le Diméthylformamide (DMF),la 1-Méthyl-2-pyrrolidinone (NMP), le 4-Méthylmorpholine, la α-Butyrolactone, l'acétonitrile, le carbonate d'éthylène, le carbonate de propylène, et leurs mélanges.

De préférence, le solvant polaire aprotique est le DMSO.

De préférence, l'éther hydrosoluble a un volume molaire inférieur à 200 cm³·mole⁻¹

Par volume molaire, on entend dans la présente description et dans les revendications correspondantes le rapport de la masse molaire de l'éther hydrosoluble exprimée en grammes par mole à la masse spécifique ρ du même éther exprimée en grammes par cm³. Le volume molaire s'exprime donc en cm³·mole⁻¹· Cette définition se retrouve dans le document "Handbook of solubility parameters and other cohesion parameters, Second Edition (1991), chapter 7, p.196 CRC Press, Allan F.M.Barton".

Avantageusement, l'éther hydrosoluble non protique est choisi parmi les éthers esters, les diéthers, les éthers cétones, notamment le 1,4-Dioxane, le 2-Méthoxy-1,3-dioxolane, le 1,3,5-Trioxane, le 1,3-Dioxolane, le Méthyl méthoxyacétate, le Méthyl-3-méthoxy-propionate (MMP), le Dipropylèneglycoldiméthyléther (DPGDME), et le Propylène glycol méthyl éther acétate (PGMA).

Parmi les éthers ci-dessus, on peut choisir avantageusement le MMP, car il procure une excellente activité de décapage; cependant le PGMA est particulièrement préféré en raison de sa très faible toxicité vis à vis des mammifères, même si son activité est inférieure à celle du MMP.

L'épaississant hydrosoluble est choisi parmi les polymères à base d'acide acrylique.

Ces polymères sont neutralisés par l'ajout d'amines aliphatiques ayant de 6 à 20 atomes de carbones, par exemple la Dodécylamine ou la 2-Ethylhexylamine. Le réglage de la quantité d'amine ajoutée permet d'obtenir la rhéologie souhaitée avec en particulier, une bonne tenue du décapant sur des parois verticales en évitant le phénomène de coulures.

Les compositions préférées selon la présente invention comporte les mélanges suivants :

| | |
|---|---|
| DMSO | environ 48 parties en poids |
| PGMA | environ 48 parties en poids |
| Carbopol® 672 | environ 2 parties en poids |
| Dodécylamine | environ 1,6 parties en poids, ou |
| 2-Ethylhexylamine | environ 1 partie en poids. |

La composition épaissie selon la présente invention, peut aussi contenir des additifs classiques par exemple un co-solvant non halogéné, un agent activateur, un ignifugeant, un stabilisant, un tensio-actif, du dioxyde de titane, un colorant.

Cette composition épaissie de décapage peut être utilisée sur tout type de peinture et/ou vernis recouvrant un subjectile ou substrat, par exemple peinture glycéroaliphatique, alkyde uréthane, époxy, polyester. Le substrat peut être du bois, du métal, du ciment, du plâtre et tout matériau relativement insensible à l'action de ladite composition. De préférence, la peinture à décaper se situe dans le secteur du bâtiment.

La mise en oeuvre de la composition est classique. L'objet ou la surface à décaper est mis en contact avec la composition a l'aide de divers moyens, par exemple brosse, pinceau ou rouleau applicateur. Cette mise en contact est effectuée à la température ambiante ou à une température allant de 5 à 30°C. Le temps de contact est généralement compris entre 15 et 45 minutes pour les couches minces de peintures et/ou vernis et de 1 à plusieurs heures pour les revêtements épais.

La présente invention sera mieux comprise à l'aide des exemples qui suivent et qui décrivent en particulier les compositions préférées.

### Exemples

### 1 - Mode opératoire général

Pour l'utilisation des compositions dans le secteur industriel, on a utilisé des peintures de l'industrie automobile. Les peintures sont des laques polyester Blanc Glacier 389 d'HERBERTS, fournies par la Société ETALON (France). L'épaisseur du revêtement est de 35 à 45 µm. Les plaques métalliques utilisées sont en acier phosphaté et ont une surface recouverte rectangulaire de 90 x 190 mm.

Pour l'utilisation dans le secteur du bâtiment, du grand public ou professionnel, on a utilisé des peintures glycéro-phtaliques déposées sur du bois. Plus précisément, 4 couches de peintures glycéro-phtaliques ont été successivement déposées sur des plaques de contreplaqué ayant une surface rectangulaire de 200x200 mm. La première couche est noire la deuxième jaune, la troisième verte et enfin la quatrième rouge, visible à la surface de la plaque.

La composition épaissie est déposée sur les deux types de plaques ci-dessus, puis étalée uniformément en une couche mince à l'aide d'une raclette métallique. On déclenche alors de chronomètre. Au bout d'un certain temps, généralement 15 minutes, on racle la peinture à l'aide d'une truelle et on observe l'aspect du substrat. S'il s'agit d'une peinture industrielle du type polyester, on mesure le temps de soulèvement du film de la plaque en acier.

### 2- Peinture glycéro-phtalique (4 couches sur plaque de contreplaqué en bois).

Deux formulations ont été comparées :
- une formulation F1 comparative ne rentrant pas dans le cadre de la présente invention ayant pour composition :

| | |
|---|---|
| DMSO | 30 parties en poids |
| Anisole | 70 parties en poids |
| Epaississant (Méthocell®311) | 1,3 parties en poids. |

Le Méthocell® 311 est commercialisé par la Société DOW CHEMICAL Co. (USA) et son procédé d'obtention figure dans le brevet US 3388082 : "Hydroxypropyl méthyl cellulose éthers":
- une formulation F2 selon l'invention :

| | |
|---|---|
| DMSO | 50 parties en poids |
| Propylène glycol méthyl éther acétate (PGMA) | 50 parties en poids |
| Epaississant Carbopol® 672 | 2 parties en poids |
| 2-Ethylhexylamine | 1,7 parties en poids |

Le Carbopol® 672 est commercialisé par la Société GOODRICH, B.F. Co, (USA) et son procédé d'obtention est décrit dans le brevet US 4419502 : "Polymerization process for carboxyl-containing polymers.

Après application de chacune des formulations F₁ et F₂, au bout de 5 min., la formulation F₁ conduit à un début de démixtion de ses composants. Si l'on place verticalement la plaque de peinture, on observe l'écoulement du plusieurs gouttes liquides. Par contre la formulation F₂ ne présente pas ces inconvénients.

Au bout de 15 min., on gratte les 2 plaques à l'aide de la truelle. Dans les deux cas apparaissent sur chaque plaque les couleurs jaune et verte. F₁ et F₂ ont donc des efficacités comparables sur cette peinture.

On rince ensuite les plaques sous un jet d'eau.

Avec F₁, on observe la formation immédiate d'un film collant (type latex) difficile à éliminer. Avec F₂, la composition épaissie, se dissout facilement sans poser de problème d'adhérence.

### 3 - Peinture polyester sur plaques d'acier

En plus des formulations F₁ et F₂, quatre autres formulations ont été préparées (F₃ à F₆).
F₃ à F₆ contiennent toutes :

| | |
|---|---|
| DMSO | 50 parties en poids |
| Ether hydrosoluble | 50 parties en poids |
| Carbopol® 672 | 2 parties en poids |
| 2-Ethylhexylamine | 1,5 à 2 parties en poids. |

Seule la nature de l'éther hydrosoluble change :
F₃ : 1,4-Dioxane
F₄ : 1,3-Dioxolane
F₅ : Tétrahydrofurane
F₆ : Méthyl-3-méthoxypropionate

Les résultats figurent dans le Tableau I suivant :

**TABLEAU I**

| FORMULATIONS | TEMPS DE SOULEVEMENT en minutes |
|---|---|
| F₁* | 10 |
| F₂ | 20 |
| F₃ | 20 |
| F₄ | 20 |
| F₅ | 5 |
| F₆ | 20 |

| | |
|---|---|
| * Comparatif | |

### 4 - Formulations préférées F₇ et F₈.

La formulation F₇ comporte :

| | |
|---|---|
| DMSO | 48,2 parties en poids |
| PGMA | 48,2 parties en poids |
| Carbopol® 672 | 2 parties en poids |
| Dodécylamine | 1,6 parties en poids. |

La formulation F₈ comporte :

| | |
|---|---|
| DMSO | 48,575 parties en poids |
| PGMA | 48,575 parties en poids |
| Carbopol® 672 | 2 parties en poids |
| 2-Ethylhexylamine | 0,85 parties en poids. |

F₇ conduit à des performances voisines de F₂ tout en ayant une viscosité un peu plus faible, ce qui facilite la mise en oeuvre. De plus, la Dodécylamine est peu toxique pour les mammifères.

F₈ conduit à des performances voisines de F₂ tout en ayant une viscosité un peu plus faible, ce qui facilite également la mise en oeuvre. De plus, la 2-Ethylhexylamine présente l'avantage d'avoir une température de cristallisation beaucoup plus basse (-76°C) que celle de la Dodécylamine (+26°C) ,ce qui. entraîne une plus faible viscosité, même à basse température.

## Revendications

1. Composition épaissie destinée au décapage des peintures et/ou vernis, **caractérisée en ce qu'**elle comprend:
a/ un solvant polaire aprotique en une quantité de 1 à 100 parties en poids,
b/ un éther hydrosoluble non protique en une quantité de 1 à 100 parties en poids,
c/ un épaississant hydrosoluble choisi parmi des polymères à base d'acide acrylique, en une quantité de 0,002 à 10 parties en poids.
d/ une amine aliphatique ayant de 6 à 20 atomes de carbone.

2. Composition selon la revendication 1, **caractérisée en ce que** le solvant polaire aprotique est choisi parmi le Diméthylsulfoxyde(DMSO), le Diméthylformamide(DMF), la 1-Méthyl-2-pyrrolidinone(NMP), la 4-Méthylmorpholine, la α-Butyrolactone, l'acétonitrile, le carbonate d'éthylène, le carbonate de propylène et leurs mélanges.

3. Composition selon la revendication 2, **caractérisée en ce que** le solvant polaire aprotique est le Diméthylsulfoxyde.

4. Composition selon l'une des revendications 1 à 3, **caractérisée en ce que** l'éther hydrosoluble a un volume molaire inférieur à 200 cm³·mole⁻¹

5. Composition selon l'une des revendications 1 à 4, **caractérisée en ce que** l'éther hydrosoluble non protique est choisi parmi les éthers esters, les diéthers, les éthers cétones, notamment le 1,4-Dioxane, le 2-Méthoxy-1,3-dioxolane, le 1,3,5-Trioxane, le Dioxolane, le Méthyl méthoxyacétate, le Méthyl-3-méthoxypropionate (MMP), le Propylène glycol méthyl éther acétate (PGMA).

6. Composition selon la revendication 5, **caractérisée en ce que** l'éther hydrosoluble est le MMP.

7. Composition selon la revendication 5, **caractérisée en ce que** l'éther hydrosoluble est le PGMA.

8. Composition selon la revendication 1, **caractérisée en ce qu'**elle comporte le mélange suivant :
| | |
|---|---|
| DMSO | environ 48 parties en poids, |
| PGMA | environ 48 parties en poids, |
| Carbopol® 672 | environ 2 parties en poids, |
| Dodécylamine | environ 1,6 parties en poids, ou |
| 2-Ethylhexylamine | environ 1 partie en poids. |

## Claims

1. Thickened composition which is intended for the stripping of paints and/or varnishes, **characterized in that** it comprises:
a/ an aprotic polar solvent in a quantity of from 1 to 100 parts by weight,
b/ a non-protic water-soluble ether in a quantity of from 1 to 100 parts by weight,
c/ a water-soluble thickener selected from polymers based on acrylic acid, in a quantity of from 0.002 to 10 parts by weight,
d/ an aliphatic amine having 6 to 20 carbon atoms.

2. Composition according to Claim 1, **characterized in that** the aprotic polar solvent is selected from dimethyl sulphoxide (DMSO), dimethylformamide (DMF), 1-methyl-2-pyrrolidinone (NMP), 4-methylmorpholine, α-butyrolactone, acetonitrile, ethylene carbonate, propylene carbonate, and mixtures thereof.

3. Composition according to Claim 2, **characterized in that** the aprotic polar solvent is dimethyl sulphoxide.

4. Composition according to one of Claims 1 to 3, **characterized in that** the water-soluble ether has a molar volume of less than 200 cm³·mol⁻¹.

5. Composition according to one of Claims 1 to 4, **characterized in that** the non-protic water-soluble ether is selected from ether esters, diethers, ether ketones, especially 1,4-dioxane, 2-methoxy-1,3-dioxolane, 1,3,5-trioxane, dioxolane, methyl methoxyacetate, methyl 3-methoxypropionate (MMP) and propylene glycol methyl ether acetate (PGMA).

6. Composition according to Claim 5, **characterized in that** the water-soluble ether is MMP.

7. Composition according to Claim 5, **characterized in that** the water-soluble ether is PGMA.

8. Composition according to Claim 1, **characterized in that** it comprises the following mixture:
| | |
|---|---|
| DMSO | Approximately 48 parts by weight, |
| PGMA | Approximately 48 parts by weight, |
| Carbopol® 672 : | Approximately 2 parts by weight, |
| Dodecylamine | Approximately 1.6 parts by weight, or |
| 2-Ethylhexylamine | Approximately 1 part by weight. |

## Patentansprüche

1. Verdickte Zusammensetzung zum (Ab-)Beizen von Farben und/oder Lacken,
**dadurch gekennzeichnet,**
**daß** sie umfaßt:
a) ein aprotisches polares Lösemittel in einer Menge von 1 bis 100 Gewichtsteilen,
b) einen nichtprotischen wasserlöslichen Ether in einer Menge von 1 bis 100 Gewichtsteilen,
c) ein wasserlösliches Verdickungsmittel, ausgewählt aus Polymeren auf Basis von Acrylsäure, in einer Menge von 0,002 bis 10 Gewichtsteilen,
d) ein aliphatisches Amin mit 6 bis 20 Kohlenstoffatomen.

2. Zusammensetzung nach Anspruch 1, **dadurch gekennzeichnet, daß** das aprotische polare Lösemittel ausgewählt ist aus Dimethylsulfoxid (DMSO), Dimethylformamid (DMF), 1-Methyl-2-pyrrolidinon (NMP), 4-Methylmorpholin, α-Butyrolacton, Acetonitril, Ethylencarbonat, Propylencarbonat und deren Mischungen.

3. Zusammensetzung nach Anspruch 2, **dadurch gekennzeichnet, daß** das aprotische polare Lösemittel Dimethylsulfoxid ist.

4. Zusammensetzung nach einem der Ansprüche 1 bis 3, **dadurch gekennzeichnet, daß** der wasserlösliche Ether ein Molvolumen von weniger als 200 cm³ · mol⁻¹ aufweist.

5. Zusammensetzung nach einem der Ansprüche 1 bis 4, **dadurch gekennzeichnet, daß** der nichtprotische wasserlösliche Ether ausgewählt ist aus Etherestern, Diethern und Etherketonen, insbesondere 1,4-Dioxan, 2-Methoxy-1,3-dioxolan, 1,3,5-Trioxan, Dioxolan, Methylmethoxyacetat, 3-Methylmethoxypropionat (MMP) und Propylenglykolmethyletheracetat (PGMA).

6. Zusammensetzung nach Anspruch 5, **dadurch gekennzeichnet, daß** der wasserlösliche Ether MMP ist.

7. Zusammensetzung nach Anspruch 5, **dadurch gekennzeichnet, daß** der wasserlösliche Ether PGMA ist.

8. Zusammensetzung nach Anspruch 1, **dadurch gekennzeichnet, daß** sie die folgende Mischung umfaßt:
| | |
|---|---|
| DMSO | etwa 48 Gewichtsteile, |
| PGMA | etwa 48 Gewichtsteile, |
| Carbopol® 672 | etwa 2 Gewichtsteile, |
| Dodecylamin | etwa 1,6 Gewichtsteile oder |
| 2-Ethylhexylamin | etwa 1 Gewichtsteil. |
